# DEMANDE DE BREVET EUROPEEN

(11) **EP 1 903 506 A1**
(43) Date de publication de la demande: **26.03.2008**
(21) Numéro de dépôt: 07115310.0
(22) Date de dépôt: 30.08.2007
(51) Int. Cl.: G07B 17/00

(54) **Procédé d'affranchissement de courriers avec stockage de numéro d'identification unique dans une base de données.**

(30) Priorité: 15.09.2006 FR 0653754
(71) Demandeur: NEOPOST TECHNOLOGIES, 92220 Bagneux (FR)
(72) Inventeur: Chatte, Fabien, 94130, Nogent sur Marne (FR)
(74) Mandataire: David, Alain

(57) **Abrégé**

Procédé d'affranchissement non sécurisé au moyen d'un terminal de communication comportant des moyens de communication avec un serveur d'un fournisseur de services d'affranchissement (14), une mémoire non sécurisée (10A) pour enregistrer des numéros d'identification et des montants d'affranchissement associés reçus dans du serveur du fournisseur de services d'affranchissement. Il peut aussi comporter des moyens de commande d'impression pour commander niveau d'une imprimante standard (20) l'impression sur un article de courrier à expédier (22) de l'un des numéros d'identification correspondant au montant d'affranchissement souhaité et extrait de la mémoire non sécurisée.

## Description

### Domaine de la technique

La présente invention se rapporte au domaine du traitement de courrier et elle concerne plus particulièrement un procédé d'affranchissement non sécurisé à partir de carnets de timbres électroniques.

### Art antérieur

Classiquement, l'impression d'empreintes postales (c'est-à-dire de timbres électroniques) au moyen d'une machine à affranchir de type fermé ou ouvert est sécurisée et nécessite l'emploi d'un dispositif postal de sécurité (PSD postal security device) intégré (système fermé) ou non (système ouvert) dans cette machine. Le premier rôle de ce PSD est de calculer et signer l'empreinte postale en fonction de diverses informations postales relatives à l'article de courrier (format, poids, service, etc...) et à la machine à affranchir (numéro de série, numéro client, etc...). Le second est de facturer le client pour chaque génération d'une empreinte postale. En effet, chaque fois qu'une empreinte postale est générée, le PSD débite un compteur interne du montant de l'affranchissement correspondant. C'est pourquoi ce PSD doit être sécurisé à la fois physiquement par des protections mécanique et thermique et numériquement par un processus de signature de l'empreinte postale. Il en est de même pour la liaison de rechargement de crédit entre la machine à affranchir et le serveur du concessionnaire de cette machine qui doit être cryptée. Il en résulte que le PSD est un module complexe et cher et il y a donc un grand intérêt à s'en dispenser dans le cadre d'un processus d'affranchissement bas de gamme comme peuvent le souhaiter les particuliers ou les très petites entreprises.

Une solution connue pour répondre à la demande de ce type de clientèle est l'impression en ligne dans lequel le PSD est déplacé dans le serveur du concessionnaire. A chaque fois qu'un client/utilisateur souhaite procéder à un affranchissement, il doit donc se connecter à ce serveur, par exemple au moyen de son ordinateur personnel pour obtenir l'autorisation, après un paiement correspondant, d'imprimer sur son imprimante personnelle une empreinte postale.

Malheureusement, cette solution n'est satisfaisante que pour l'impression d'un timbre unique car lorsqu'il s'agit d'en imprimer plusieurs, elle devient longue à mettre en oeuvre et consommatrice de temps de communication avec le serveur du concessionnaire.

### Objet et définition de l'invention

La présente invention a pour but de pallier les inconvénients précités en proposant un procédé d'affranchissement non sécurisé qui permette l'impression de carnets de timbres électroniques.

Ces buts sont atteints par un procédé d'affranchissement non sécurisé d'empreintes postales comportant les étapes suivantes :
. connexion au moyen d'un terminal de communication d'un utilisateur au site d'un fournisseur de services d'affranchissement,
. commande par l'utilisateur sur le site du fournisseur de services d'affranchissement d'empreintes postales en nombre et montant d'affranchissement souhaités et paiement correspondant,
. génération par le serveur du fournisseur de services d'affranchissement, pour chacune des empreintes postales ainsi payées, d'un numéro d'identification unique,
. transmission, par le fournisseur de services d'affranchissement, pour chaque empreinte postale payée, du numéro d'identification et du montant d'affranchissement associé au terminal de communication de l'utilisateur,
. report manuel par l'utilisateur sur un article de courrier à expédier de l'un des numéros d'identification correspondant au montant d'affranchissement souhaité, puis des suivants au fur et à mesure des besoins de l'utilisateur,
caractérisé en ce que lesdits numéros d'identification et montants d'affranchissement reçus dudit serveur sont enregistrés dans une mémoire non sécurisée du terminal de communication, et pour chaque empreinte postale payée, ledit numéro d'identification et ledit montant d'affranchissement associé, sont stockés dans une base de données du fournisseur de services d'affranchissement dont l'accès est partagé avec un serveur de l'administration postale, afin de permettre la suppression des numéros d'identification reconnus lors de la réception des articles de courrier par l'administration postale.

Ainsi, l'invention supprime le recours à un PSD ou tout autre moyen de sécurisation équivalent, la validité d'une empreinte postale résultant du simple enregistrement d'un numéro d'identification dans une base de données dont l'accès est partagé avec l'administration postale.

De préférence, ledit report manuel comporte aussi le report manuel du montant d'affranchissement associé audit numéro d'identification imprimé.

Dans un mode particulier de réalisation, l'étape de report manuel est remplacée par les étapes suivantes :
. commande par l'utilisateur, depuis le terminal de communication, de l'impression sur un article de courrier à expédier par une imprimante standard de l'un des numéros d'identification correspondant au montant d'affranchissement souhaité, et
. suppression du numéro d'identification ainsi imprimé des numéros d'identification enregistrés dans le terminal de communication de l'utilisateur.

Ainsi, le report n'est plus effectué à la main par l'utilisateur mais automatiquement au moyen d'une imprimante standard.

Selon une variante de réalisation, ladite commande d'impression peut aussi comporter l'impression du montant d'affranchissement associé audit numéro d'identification imprimé ou encore l'impression de données variables élaborées dans le terminal de communication ou l'imprimante standard lors de l'impression et/ou de données statiques préenregistrées au niveau du terminal de communication ou de l'imprimante standard. Ces données statiques et/ou variables peuvent comporter l'un des éléments suivants : un logo, un fond de timbre, une date du jour.

L'invention concerne aussi le procédé de vérification par l'administration postale de la validité d'une empreinte postale portée sur un article de courrier, caractérisé en qu'il comporte les étapes suivantes :
. saisie d'un numéro d'identification unique imprimé sur cet article de courrier,
. comparaison d'un numéro d'identification ainsi saisi avec des numéros d'identification présents dans une base de données dont l'accès est partagé entre un serveur d'un fournisseur de services d'affranchissement et une administration postale,
. en cas d'identité, suppression du numéro d'identification reconnu de la base de données en accès partagé.

Selon une variante de réalisation, ladite étape de comparaison peut aussi comporter la comparaison du montant d'affranchissement imprimé avec un montant d'affranchissement calculé par l'administration postale à partir de l'article de courrier reçu.

L'invention concerne également un terminal de communication permettant un affranchissement non sécurisé d'empreintes postales, caractérisé en ce qu'il comporte :
. des moyens de communication avec un serveur d'un fournisseur de services d'affranchissement, et
. une mémoire non sécurisée pour enregistrer des numéros d'identification et des montants d'affranchissement associés reçus dans du serveur du fournisseur de services d'affranchissement, et éventuellement
. des moyens de commande d'impression pour commander au niveau d'une imprimante standard l'impression sur un article de courrier à expédier de l'un des numéros d'identification correspondant au montant d'affranchissement souhaité et extrait de la mémoire non sécurisée.

Le terminal peut, lorsque cela est possible, aussi prévoir des moyens pour effacer le numéro d'identification ainsi imprimé des numéros d'identification enregistrés dans la mémoire non sécurisée.

Selon une variante de réalisation, lesdits moyens de commande de l'impression sont également apte à commander l'impression sur l'article de courrier à expédier du montant d'affranchissement et de données statiques et/ou variables.

L'invention concerne également un serveur de gestion permettant un affranchissement non sécurisé d'empreintes postales, caractérisé en ce qu'il comporte :
. des moyens de communication avec un terminal de communication d'un utilisateur,
. des moyens de génération d'un numéro d'identification unique pour chacune des empreintes postales payées par l'utilisateur,
. des moyens de stockage dans une base de données dont l'accès est partagé avec l'administration postale des numéros d'identification et montants d'affranchissement associés correspondant aux empreintes postales payées par l'utilisateur,
. des moyens de transmission au terminal de communication de l'utilisateur des numéros d'identification et montants d'affranchissement associés correspondant aux empreintes postales payées par l'utilisateur, et
. des moyens de suppression dans ladite base de données des numéros d'identification correspondant aux numéros d'identification imprimés sur les articles de courriers parvenus auprès de l'administration postale.

L'invention concerne encore un programme informatique téléchargeable depuis un réseau de communication et/ou stocké sur un support d'enregistrement lisible par ordinateur, caractérisé en ce qu'il comprend des instructions de code pour l'exécution des étapes du procédé d'affranchissement non sécurisé précité lorsqu'il est exécuté sur le terminal de communication.

L'invention concerne enfin un support d'enregistrement sur lequel est stocké le programme informatique.

### Brève description des dessins

D'autres caractéristiques et avantages de la présente invention ressortiront mieux de la description suivante, faite à titre indicatif et non limitatif, en regard des dessins annexés, sur lesquels:
- la figure 1 est un exemple d'une architecture de réseau permettant la mise en oeuvre du procédé d'affranchissement non sécurisé selon l'invention, et
- la figure 2 est un organigramme illustrant les différentes étapes du procédé mis en oeuvre sur le réseau de la figure 1.

### Description détaillée d'un mode de réalisation préférentiel de l'invention

L'invention est destinée à permettre à un particulier ou une très petite entreprise d'affranchir son courrier sans recourir à un dispositif postal de sécurité (PSD) qu'il soit associé à une machine à affranchir ou à un serveur d'un fournisseur de services d'affranchissement.

Pour ce faire, il est proposé de remplacer ce PSD par une simple mémoire standard non sécurisée contenant une série d'empreintes postales représentant un ou plusieurs carnets de timbres électroniques que l'utilisateur se sera procuré auprès d'un serveur spécialisé.

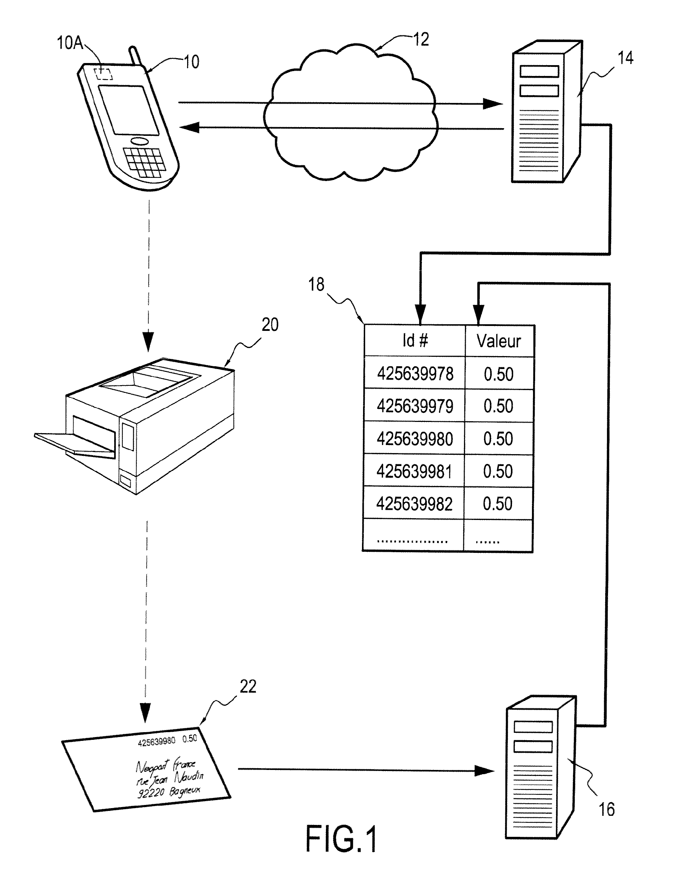

La figure 1 est un exemple d'architecture de réseau permettant la mise en oeuvre du procédé d'affranchissement non sécurisé selon l'invention.

Ce réseau informatique et de communications est organisé autour d'un terminal de communication 10 portatif (téléphone mobile, ordinateur portable communiquant, assistant numérique personnel communiquant, console de jeux communicante, etc.) ou non (ordinateur de bureau, machine kiosque en libre service, etc.) qui est en liaison, via un réseau de communication (de préférence un réseau 3G ou le réseau internet 12) avec un serveur d'un fournisseur de services d'affranchissement 14 lui-même en liaison avec un serveur de l'administration postale 16 et avec lequel il partage une base de données 18. Lorsque l'empreinte postale n'est pas reportée manuellement par l'utilisateur, une imprimante standard 20 connectée au terminal de communication avec ou sans fil, par une liaison radio courte distance (notamment bluethooth®) ou infrarouge par exemple, est disponible pour l'impression d'une empreinte postale sur une enveloppe 22 ou un étiquette à coller sur une enveloppe épaisse ou un colis à expédier.

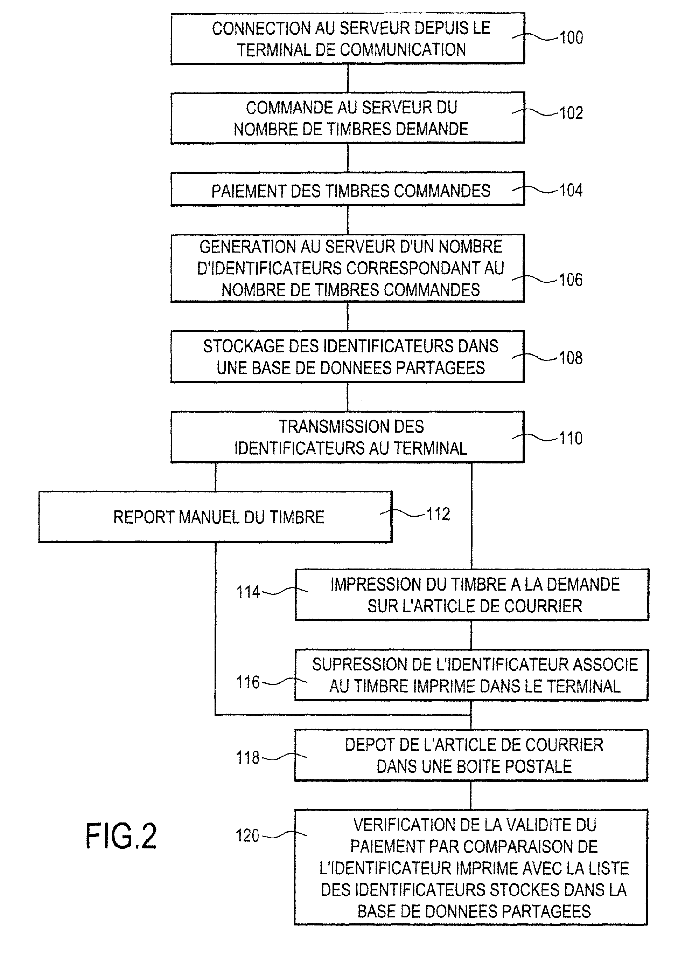

La figure 2 illustre les différentes étapes du procédé d'affranchissement non sécurisé mis en oeuvre dans ce réseau.

Dans une première étape 100, l'utilisateur va au moyen de son terminal de communication se connecter sur le site du fournisseur de services d'affranchissement et procéder dans une étape 102 à une commande de timbres électroniques du nombre et du montant souhaités, par exemple 25 timbres de 50 cts, 10 timbres de 10 cts, 10 timbres de 5cts, etc.

Dans une étape 104, il va payer ces timbres par tout moyen de paiement à sa disposition. Il peut s'agir d'un paiement par communication des références de carte bancaire au serveur, par débit d'une carte prépayée et information du serveur du débit correspondant ou par simple débit d'un compte client si l'utilisateur dispose d'un compte chez le fournisseur du service par exemple.

Le serveur du fournisseur de services d'affranchissement va alors dans une étape 106 générer pour chacun des timbres payés un identificateur constitué par un numéro d'identification unique, soit dans l'exemple précité générer 45 numéros d'identification. Chacun de ces numéros d'identification associés au montant du timbre correspondant seront alors d'une part, dans une étape 108, stockés dans la base de données partagée avec l'administration postale et d'autre part, dans une étape 110, transmis au terminal de communication de l'utilisateur pour être enregistrés dans une mémoire non sécurisée 10A de ce terminal.

On aura noté que selon l'invention chaque empreinte postale ou timbre électronique est donc en fait constitué par un simple numéro d'identification unique sans signature ni élément crypté.

L'utilisateur est maintenant en possession d'un ensemble de timbres électroniques qu'il pourra utiliser à sa guise jusqu'à épuisement (comme il le ferait avec un carnet de timbres) sans avoir à se reconnecter au serveur du fournisseur de services d'affranchissement à chaque impression.

Notamment, il lui est ainsi possible de reporter manuellement, dans une étape 112, le numéro d'identification unique avec ou non le montant d'affranchissement qui lui est associé directement sur l'article de courrier à expédier 22 puis de poster cet article (étape 118).

Mais, il peut aussi, dans une étape alternative 114, en commandant l'impression correspondante à partir de son imprimante, procéder à l'impression d'un timbre du montant d'affranchissement désiré sur l'enveloppe à expédier ou sur l'étiquette à coller sur le colis à expédier. Cette impression pourra être limitée à l'impression du seul numéro d'identification ou comporter aussi le montant d'affranchissement et des données statiques préenregistrées au niveau du terminal et reçues préalablement du serveur (ou extraites d'une carte à puce délivrée par le fournisseur du service et insérée préalablement dans le terminal ou l'imprimante), par exemple un logo ou un fond de timbre (en formé d'aigle pour les Etats-Unis d'Amériques), et des données variables comme la date du jour élaborées dans le terminal de communication ou directement dans l'imprimante lors de l'impression.

Lorsque cela est possible, cette commande de l'impression a pour effet, dans une étape 116, d'effacer (supprimer) le numéro d'identification associé au timbre ainsi imprimé de la liste des numéros d'identification reçue du serveur et disponible dans la mémoire non sécurisée du terminal de communication de l'utilisateur.

L'enveloppe ou le colis ainsi affranchi, l'utilisateur n'aura plus, dans une étape 118, qu'à le déposer dans une boite postale ou auprès d'un bureau de réception de l'administration postale qui pourra vérifier la validité de son affranchissement en saisissant le numéro d'identification unique imprimé sur l'article de courrier et en le comparant avec ceux présents dans la base de données dont l'accès est partagé (étape 120). En cas d'identité, le numéro reconnu sera alors supprimé de la base de données, les articles de courrier ultérieurs portant ce même numéro étant alors rejetés par l'administration postale comme synonyme de timbres contrefaisants.

Bien entendu, l'essentiel des étapes de ce procédé sont exécutées par un programme informatique qui peut être téléchargé depuis un réseau de communication ou être stocké sur un support d'enregistrement lisible par ordinateur et qui est ensuite enregistré dans une mémoire dans le terminal de communication.

Ainsi, le procédé d'affranchissement non sécurisé de l'invention bien que ne mettant pas en oeuvre un PSD, garantit tout de même à l'administration postale un paiement de ses affranchissements puisque la comparaison avec la base de données renfermant la liste des numéros d'identification ayant fait l'objet d'un paiement permet à celle-ci de refuser l'acheminement à leur expéditeur d'articles de courrier portant un numéro d'identification inconnu ou ayant déjà fait l'objet d'un traitement précédent car non présent dans la base de données partagée.

## Revendications

1. Procédé d'affranchissement non sécurisé d'empreintes postales, comportant les étapes suivantes :
. connexion au moyen d'un terminal de communication (10) d'un utilisateur au site d'un fournisseur de services d'affranchissement,
. commande par l'utilisateur sur le site du fournisseur de services d'affranchissement d'empreintes postales en nombre et montant d'affranchissement souhaités et paiement correspondant,
. génération par le serveur (14) du fournisseur de services d'affranchissement, pour chacune des empreintes postales ainsi payées, d'un numéro d'identification unique,
. transmission, par le fournisseur de services d'affranchissement, pour chaque empreinte postale payée, du numéro d'identification et du montant d'affranchissement associé au terminal de communication de l'utilisateur, et
. report manuel par l'utilisateur sur un article de courrier à expédier de l'un des numéros d'identification correspondant au montant d'affranchissement souhaité, puis des suivants au fur et à mesure des besoins de l'utilisateur,
**caractérisé en ce que** lesdits numéros d'identification et montants d'affranchissement reçus dudit serveur sont enregistrés dans une mémoire non sécurisée (10A) du terminal de communication, et pour chaque empreinte postale payée, ledit numéro d'identification et ledit montant d'affranchissement associé, sont stockés dans une base de données (18) du fournisseur de services d'affranchissement dont l'accès est partagé avec un serveur (16) de l'administration postale, afin de permettre la suppression des numéros d'identification reconnus lors de la réception des articles de courrier par l'administration postale.

2. Procédé selon la revendication 1, **caractérisé en ce que** ledit report manuel comporte aussi le report manuel du montant d'affranchissement associé audit numéro d'identification imprimé.

3. Procédé selon la revendication 1, **caractérisé en ce que** ladite étape de report manuel est remplacée par les étapes suivantes :
. commande par l'utilisateur, depuis le terminal de communication, de l'impression sur un article de courrier à expédier par une imprimante standard (20) de l'un des numéros d'identification correspondant au montant d'affranchissement souhaité, et
. suppression du numéro d'identification ainsi imprimé des numéros d'identification enregistrés dans le terminal de communication de l'utilisateur.

4. Procédé selon la revendication 3, **caractérisé en ce que** ladite commande d'impression comporte aussi l'impression du montant d'affranchissement associé audit numéro d'identification imprimé.

5. Procédé selon la revendication 3, **caractérisé en ce que** ladite commande d'impression comporte aussi l'impression de données variables élaborées dans le terminal de communication ou l'imprimante standard lors de l'impression et/ou de données statiques préenregistrées au niveau du terminal de communication ou de l'imprimante standard.

6. Procédé selon la revendication 5, **caractérisé en ce que** lesdites données statiques et/ou variables comportent l'un des éléments suivants : un logo, un fond de timbre, une date du jour.

7. Procédé de vérification par l'administration postale de la validité d'une empreinte postale portée sur un article de courrier (22), **caractérisé en qu'**il comporte les étapes suivantes :
. saisie d'un numéro d'identification unique imprimé sur cet article de courrier,
. comparaison du numéro d'identification ainsi saisi avec des numéros d'identification présents dans une base de données (18) dont l'accès est partagé entre un serveur d'un fournisseur de services d'affranchissement (14) et un serveur d'une administration postale (16),
. en cas d'identité, suppression du numéro d'identification reconnu de la base de données en accès partagé.

8. Procédé selon la revendication 7, **caractérisé en ce qu'**il comporte en outre une étape de comparaison du montant d'affranchissement imprimé avec un montant d'affranchissement calculé par l'administration postale à partir de l'article de courrier reçu.

9. Terminal de communication permettant un affranchissement non sécurisé d'empreintes postales, **caractérisé en ce qu'**il comporte :
. des moyens de communication avec un serveur d'un fournisseur de services d'affranchissement (14), et
. une mémoire non sécurisée (10A) pour enregistrer des numéros d'identification et des montants d'affranchissement associés reçus dans du serveur du fournisseur de services d'affranchissement.

10. Terminal de communication selon la revendication 9, **caractérisé en ce qu'**il comporte en outre :
. des moyens de commande d'impression pour commander au niveau d'une imprimante standard (20) l'impression sur un article de courrier à expédier (22) de l'un des numéros d'identification correspondant au montant d'affranchissement souhaité et extrait de la mémoire non sécurisée.

11. Terminal de communication selon la revendication 9 ou la revendication 10, **caractérisé en ce qu'**il comporte en outre :
. des moyens pour effacer le numéro d'identification ainsi imprimé des numéros d'identification enregistrés dans la mémoire non sécurisée.

12. Terminal de communication selon la revendication 10 ou la revendication 11, **caractérisé en ce que** lesdits moyens de commande de l'impression sont également apte à commander l'impression sur l'article de courrier à expédier du montant d'affranchissement et de données statiques et/ou variables.

13. Serveur de gestion (14) permettant un affranchissement non sécurisé d'empreintes postales, **caractérisé en ce qu'**il comporte :
. des moyens de communication avec un terminal de communication d'un utilisateur (10),
. des moyens de génération d'un numéro d'identification unique pour chacune des empreintes postales payées par l'utilisateur,
. des moyens de stockage dans une base de données (18) dont l'accès est partagé avec un serveur d'une administration postale (16) des numéros d'identification et montants d'affranchissement associés correspondant aux empreintes postales payées par l'utilisateur,
. des moyens de transmission au terminal de communication de l'utilisateur des numéros d'identification et montants d'affranchissement associés correspondant aux empreintes postales payées par l'utilisateur, et
. des moyens de suppression dans ladite base de données des numéros d'identification correspondant aux numéros d'identification imprimés sur les articles de courriers parvenus auprès de l'administration postale.

14. Programme informatique téléchargeable depuis un réseau de communication et/ou stocké sur un support d'enregistrement lisible par ordinateur, **caractérisé en ce qu'**il comprend des instructions de code pour l'exécution des étapes du procédé d'affranchissement non sécurisé selon l'une quelconque des revendications 1 à 6 lorsqu'il est exécuté sur le terminal de communication selon l'une quelconque des revendications 9 à 12.

15. Support d'enregistrement sur lequel est stocké le programme informatique selon la revendication 14.
